# EUROPÄISCHE PATENTSCHRIFT

(11) **EP 1 814 066 B1**
(45) Veröffentlichungstag und Bekanntmachung des Hinweises auf die Patenterteilung: **02.05.2012**
(21) Anmeldenummer: 06077267.0
(22) Anmeldetag: 15.12.2006
(51) Int. Cl.: G06K 19/073

(54) **Informationsträger mit Mitteln zum kontaktlosen Auslesen**
Information carrier comprising means for contactless reading
Support d'informations comprenant des moyens pour la lecture sans contact

(30) Priorität: 24.01.2006 DE 102006004805
(43) Veröffentlichungstag der Anmeldung: 01.08.2007
(73) Patentinhaber: Vodafone Holding GmbH, 40213 Düsseldorf (DE)
(72) Erfinder: Hertle, Jochen, Dr. rer. nat., 85521 Ottobrunn (DE)
(74) Vertreter: Meissner, Peter E.

(56) Entgegenhaltungen:
- EP-A2- 0 849 703
- WO-A-03/046823
- WO-A-2004/079644
- DE-A1- 3 928 573
- GB-A- 2 407 189

## Beschreibung

Die Erfindung betrifft einen Informationsträger mit einer Übertragungseinheit zum kontaktlosen Übertragen von Signalen über eine Kurzstrecke, insbesondere einen Informationsträger der gemäß eines RFID (Radio Frequency Identification) oder eines NFC (Near Field Communication) Informationen übertragen kann.

Bekannt sind Kurzstrecken Übertragungsmittel für die kontatklose Übertragung unter anderem aus den Bereichen der Warensicherung, der Wegfahrsperren, sowie von Warenwirtschaftssystemen. Bevorzugte Technologien sind RFID und NFC.

RFID-Transponder bestehen in der Regel aus einer Antenne, einem analogen Schaltkreis zum Empfangen und Senden, dem Transponder im engeren Sinne, und einem Speicher sowie einem Schaltkreis zur Steuerung des Transponders. Der Speicher kann als permanenter Speicher oder als wiederbeschreibbarer Speicher ausgestaltet sein. In Abhängigkeit von der verwendeten Frequenz und Sendeleistung haben RFID Transponder unterschiedliche Reichweiten.

Im Allgemeinen wird zum Auslesen des Speichers durch ein Lesegerät ein hochfrequentes elektromagnetisches Feld erzeugt. Die Antenne des RFID-Transponders empfängt dies Feld, dabei entsteht ein Induktionsstrom, der zum Aktivieren, und bei sogenannten passiven RFID Transpondern zum Betrieb des RFID Transponders verwendet wird.

Die Aktivierung wird durch Senden eines Speicherinhaltes beantwortet, wobei vom Lesegerät spezifische Anfragen gesendet werden können die von der Steuereinheit des RFID Transponders mit entsprechenden Speicherinhalten beantwortet werden können. Zur Übertragung wird dabei in der Regel die so genannte Lastmodulation verwendet, die durch Leistungsaufnahme das vom Lesegerät erzeugte Feld moduliert.

Im ultrahochfrequenten Bereich bei 865 - 920 MHz kommt das so genannte "Backscattering" Verfahren zum Einsatz, bei dem ein vom einem Lesegerät ausgestrahltes Feld in geeigneter Weise reflektiert oder absorbiert wird.

Aus der Schrift DE 3928573 A1 ist eine Radiowellen-Antwortsendervorrichtung in einem Antwortsendersystem bekannt, die eine Anzeigeeinrichtung enthält, welche eine Information darüber gibt, ob sich das Antwortsendegerät in einem optimalen Feldstärkebereich befindet, d.h. ob ein Kontakt zwischen dem Antwortsendegerät und einer Abfrageeinrichtung möglich wäre.
Die Schrift EP 0 849 703 A2 zeigt einen mobilen, maschinell lesbaren Informationsträger, bei dem die das Energie- und Informationssignal führende Antenne, deren Ausgang, der Eingang oder Ausgang des der Antenne nachgeschalteten Interfaces als auch die Energie- und Informationsflußleitungen des Gesamtsystems durch ein in dem Informationsträger angeordnetes Schaltersystem unterbrechbar ist.

Des Weiteren kann das sogenannte "continuous wave" Verfahren, bei dem die von einem Lesegerät erzeugte Energie auf einer ersten Frequenz empfangen und eine Antwort auf einem Seitenband der Frequenz gesendet wird, genutzt werden.
Allen diesen Verfahren ist gemeinsam, dass sie jederzeit einen kontaktlosen Zugriff auf gespeicherte Daten ermöglichen. Dies hat den Nachteil, dass eine Kontrolle des Zugriffs auf den Speicherinhalt nicht möglich ist.

Der Erfindung lag die Aufgabe zugrunde, eine Abfrage über die Übertragungseinheit anzuzeigen, so dass ein unbefugter Zugriff auf den Informationsträger visuell überwacht werden kann.
Die Lösung der Aufgabe erfolgt durch einen Informationsträger mit den Merkmalen des Anspruchs 1. Die weiteren Ansprüche stellen zweckmäßige Weiterbildungen der errfindungsgemäßen Lösung dar.

Der erfindungsgemäße Informationsträger weist eine Übertragungseinheit zum kontaktlosen Übertragen von Signalen über eine Kurzstrecke auf, sowie manuelle Mittel zum Deaktivieren dieser Übertragungseinheit.
Die Übertragungseinheit kann so ausgeführt sein, dass sie in Übereinstimmung mit einem RFID oder NFC Standard arbeitet.
Erfindungsgemäß enthält der Informationsträger eine Anzeigevorrichtung zur Anzeige, dass eine Abfrage über die Übertragungseinheit empfangen wird.

In einer Ausführungsform der Erfindung sind die manuellen Mittel dergestalt an einem Gehäuse des Informationsträgers angebracht, dass eine Bedienung von außen möglich ist.

Die manuellen Mittel können als ein im Wesentlichen mechanisches Mittel ausgestaltet sein.

Die manuellen Mittel können so ausgeführt sein, das sie eine Verbindung zwischen einem Speicher und einer Antenne der Übertragungseinheit unterbrechen oder herstellen.

In einer Ausführungsform der Erfindung können die manuellen Mittel eine Verbindung zwischen mindestens zweien der folgenden Elemente unterbrechen: einem Steuerchip, einer Antenne, einer Energieversorgung und einem Speicher.

Der Informationsträger kann beispielsweise als Endgerät zur Kommunikation mit einem zellularen Telekommunikationsnetz ausgestaltet sein.

Die Erfindung soll an einem Ausführungsbeispiel anhand der Zeichnung näher erläutert werden.
In der Zeichnung zeigen:
Figur 1: ein Schema einer erfindungsgemäßen Ausführungsform eines Informationsträgers.
Figur 2: ein Schema eines Informationsträgers wie aus dem Stand der Technik bekannt.

Die Erfindung betrifft Informationsträger nach dem Oberbegriff des Anspruchs 1.

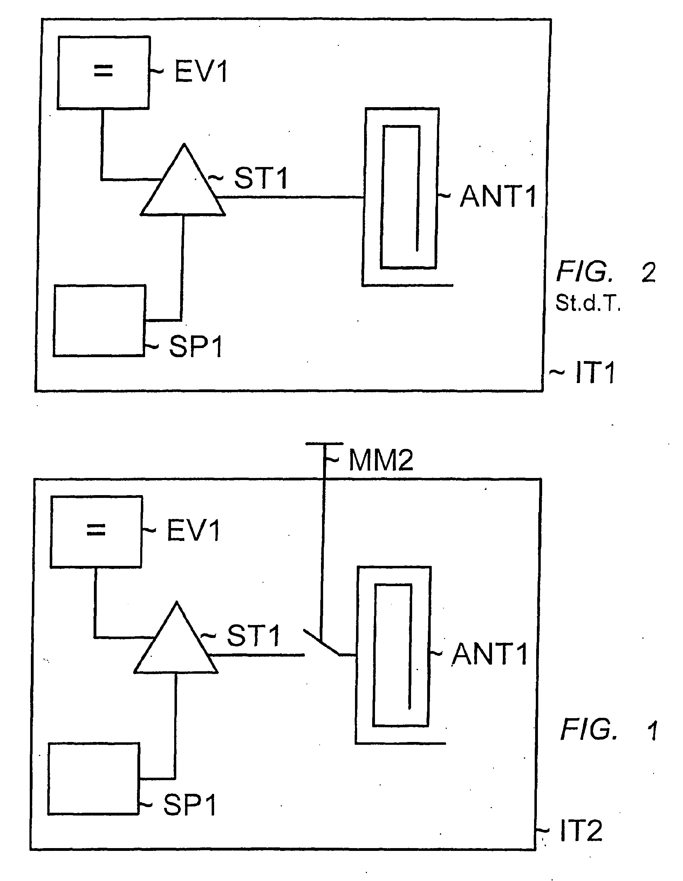

Figur 2 zeigt ein Schema eines bekannten Informationsträgers IT1 umfassend einen Steuerchip ST1, einen Speicher SP1, eine Antenne ANT1 sowie eine Energieversorgung EV1. Der Steuerchip ST1 sowie die Antenne ANT1 implementieren in der dargestellten Ausführungsform die Übertragungseinheit des Informationsträgers IT1. Die Energieversorgung EV1 ist optional. Im Betrieb empfängt der Informationsträger über seine Antenne elektromagnetische Signale, die den Informationsträger aktivieren. Für den Fall, dass auf eine interne Energieversorgung verzichtet wird, liefert das Signal auch die zum Betrieb des Informationsträgers erforderliche Energie. Beim dargestellten Informationsträger ist die Sende-/Empfangseinrichtung in dem Steuerchip ST1 integriert, sie kann aber auch unabhängig von dem Steuerchip ST1 integriert werden. Der Steuerchip ST1 interpretiert die empfangenen elektromagnetischen Signale und veranlasst die Übertragung eines entsprechenden Inhaltes des Speichers SP1 über die Antenne. Derartige Informationsträger sind aus dem Stand der Technik bekannt.

Figur 1 zeigt eine erfindungsgemäße Ausführungsform eines Informationsträgers IT2. Der Informationsträger IT2 umfasst einen kombinierten Steuer- und Sendeempfangschip ST1, einen Speicher SP1, eine Energieversorgung EV1, eine Antenne ANT1 sowie manuelle Mittel MM2. Die Funktion des Speichers SP1, des kombinierten Sende-/Empfangs- und Steuerchips ST1, der Energieversorgung EV1, sowie der Antenne ANT1 entsprechen denen aus Figur 2. Auch beim erfindungsgemäßen Informationsträger ist die Energieversorgung EV1 optional. Auch bei dieser Ausführungsform kann der kombinierte Sende-/Empfangs- und Steuerchip ST1 durch mehrere Elemente implementiert werden.

In der dargestellten Ausführungsform unterbrechen die manuellen Mittel MM2 eine Verbindung zwischen den kombinierten Sende-/Empfangs- und Steuerchip ST1 und der Antenne ANT1. Die manuellen Mittel MM2 können beispielsweise in der Form eines Tasters, eines Schalters, eines Touchscreens oder eines Relais implementiert werden. Grundsätzlich ist jedes manuelle Mittel, das zur Verbindung und/oder Unterbrechung von mehreren elektronischen Elementen geeignet ist, zur Umsetzung der manuellen Mittel MM2 einsetzbar.
Der erfindungsgemäße Informationsträger ist mit einer nicht weiter ausgeführten Anzeigevorrichtung zur Anzeige einer Abfrage über die Übertragungseinheit ausgestattet.

In einer weiteren Ausführungsform der Erfindung unterbrechen bzw. verbinden die manuellen Mittel MM2 mindestens zwei der folgenden Elemente: den Steuerchip, die Antenne, die Energieversorgung und den Speicher.

Der Informationsträger kann als Endgerät zur Kommunikation mit einem zellularen Telekommunikationsnetz ausgestaltet sein oder Teil eines solchen Endgerätes sein. So kann der Informationsträger beispielsweise als RFID oder NFC-Element innerhalb des Gehäuses eines Endgerätes für ein zellulares Telekommunikationsnetz eingebaut sein.
Bei einem Einbau in ein solches Endgerät kann die Signalisierung einer empfangenen Anforderung beispielsweise optisch, über ein Display oder ein Leuchtmittel, akustisch wie mittels eines Signaltons oder haptisch zum Beispiel über Vibrationen erfolgen. Der Nutzer eines Endgerätes hat damit die Möglichkeit frei zu entscheiden ob er, mittels der manuellen Mittel, einen Zugriff auf den Speicher erlaubt oder untersagt.

## Patentansprüche

1. Informationsträger mit einer Übertragungseinheit zum kontaktlosen Übertragen von Signalen über eine Kurzstrecke mit einem Steuerchip, einer Antenne, einer Energieversorgung und einem Speicher, wobei die Übertragungseinheit in Übereinstimmung mit einem RFID- oder NFC-Standard arbeitet und manuelle Mittel zum Deaktivieren der Übertragungseinheit aufweist, die eine Verbindung zwischen einem Speicher und einer Antenne der Übertragungseinheit unterbrechen oder herstellen, **gekennzeichnet durch** eine Anzeigevorrichtung zur Anzeige, dass eine Abfrage über die Übertragungseinheit empfangen wird.

2. Informationsträger nach Anspruch 1,
**dadurch gekennzeichnet, dass** die manuellen Mittel dergestalt an einem Gehäuse des Informationsträgers angebracht ist, dass eine Bedienung von außen möglich ist.

3. Informationsträger nach einem der vorhergehenden Ansprüche,
**dadurch gekennzeichnet, dass** das manuelle Mittel ein im Wesentlichen mechanisches Mittel ist.

4. Informationsträger nach einem der vorhergehenden Ansprüche,
**dadurch gekennzeichnet, dass** die manuellen Mittel eine Verbindung zwischen mindestens zweien der folgenden Elemente unterbrechen: einem Steuerchip, einer Antenne, einer Energieversorgung und einem Speicher.

5. Informationsträger nach einem der vorhergehenden Ansprüche,
**dadurch gekennzeichnet, dass** er als Endgerät zur Kommunikation mit einem zellularen Telekommunikationsnetz ausgestaltet ist.

## Claims

1. Information carrier having a transmission unit for contactless transmission of signals over a short range, having a control chip, an antenna, an energy supply and a memory, the transmission unit operating in accordance with an RFID or NFC standard and including manual means for deactivating the transmission unit which interrupt or establish a connection between a memory and an antenna of the transmission unit,
**characterised by** an indicating device for indicating that a request is received via the transmission unit.

2. Information carrier according to Claim 1,
**characterised in that** the manual means is mounted on a housing of the information carrier in such a manner that operation from the outside is possible.

3. Information carrier according to one of the preceding claims,
**characterised in that** the manual means is a substantially mechanical means.

4. Information carrier according to one of the preceding claims,
**characterised in that** the manual means interrupt a connection between at least two of the following elements: a control chip, an antenna, an energy supply and a memory.

5. Information carrier according to one of the preceding claims,
**characterised in that** it is configured as a terminal for communication with a cellular telecommunications network.

## Revendications

1. Support d'information avec une unité de transmission pour la transmission sans contact de signaux sur un court trajet avec une puce de commande, une antenne, une alimentation en énergie et une mémoire, dans lequel l'unité de transmission fonctionne en accord avec une norme RFID ou N FC et présente un moyen manuel de désactivation de l'unité de transmission, qui interrompt ou établit une connexion entre une mémoire et une antenne de l'unité de transmission, **caractérisé par** un dispositif d'affichage pour afficher qu'une demande est reçue via l'unité de transmission.

2. Support d'information selon la revendication 1,
**caractérisé en ce que** le moyen manuel est installé sur un boîtier du support d'information de sorte qu'une commande soit possible de l'extérieur.

3. Support d'information selon l'une quelconque des revendications précédentes,
**caractérisé en ce que** le moyen manuel est un moyen sensiblement mécanique.

4. Support d'information selon l'une quelconque des revendications précédentes,
**caractérisé en ce que** le moyen manuel interrompt une connexion entre au moins deux des éléments suivants : une puce de commande, une antenne, une alimentation en énergie et une mémoire.

5. Support d'information selon l'une quelconque des revendications précédentes,
**caractérisé en ce qu'**il se présente sous la forme d'un terminal pour communiquer avec un réseau de télécommunications cellulaire.
